Europäisches Patentamt

European Patent Office

Office européen des brevets

(11) Numéro de publication: **0 252 796**
**B1**

(12) **FASCICULE DE BREVET EUROPEEN**

(45) Date de publication du fascicule du brevet:
26.09.90

(21) Numéro de dépôt: 87401411.1

(22) Date de dépôt: 22.06.87

(51) Int. Cl.⁵: **B60Q 1/00, H01H 1/58**

(54) **Manette pour la commande de commutateurs, en particulier pour véhicules automobiles, et pièce de guidage pour la réalisation de cette manette.**

(30) Priorité: **23.06.86 FR 8609042**

(43) Date de publication de la demande:
**13.01.88 Bulletin 88/2**

(45) Mention de la délivrance du brevet:
**26.09.90 Bulletin 90/39**

(84) Etats contractants désignés:
**DE ES GB IT**

(56) Documents cités:
**EP-A- 0 024 166**
**DE-A- 2 049 849**
**DE-B- 2 853 746**
**FR-A- 2 082 440**

(73) Titulaire: **JAEGER, 2, rue Baudin,**
**F-92303 Levallois-Perret(FR)**

(72) Inventeur: **Chretien, Louis-Jacques, 65, rue du Grillon,**
**F-95610 Eragny S/Oise(FR)**

(74) Mandataire: **Martin, Jean-Jacques et al, Cabinet REGIMBEAU 26, Avenue Kléber, F-75116 Paris(FR)**

ACTORUM AG

## Description

La présente invention concerne le domaine des commutateurs, en particulier les commutateurs pour véhicules automobiles.

La présente invention concerne plus précisément encore une manette pour la commande de commutateurs du type comprenant :

- un corps de manette monté à rotation sur un support et qui porte des contacts électroniques,
- un bouton de commande monté mobile sur le corps de manette pour modifier l'état de liaison des contacts électriques,
- des fils de liaison reliés aux contacts électriques portés par le corps de manette, ces fils de liaison traversant le corps de manette et étant engagés dans un alésage ménagé dans le support.

La présente invention a pour but de perfectionner les manettes pour la commande de commutateurs du type précité.

L'un des buts de la présente invention est de proposer une manette de réalisation simple, robuste et économique.

Un autre but de la présente invention est de proposer une manette conçue pour protéger les fils de liaison lors de la rotation du corps de manette par rapport au support.

Ces différents buts sont atteints dans le cadre de la présente invention grâce à une manette pour la commande de commutateurs du type précité comprenant en outre une pièce du guidage allongée fixée sur le corps de manette et engagée dans l'alésage du support, qui définit des canaux longitudinaux débouchant sur l'extérieur pour recevoir les fils de liaison et éviter une torsion de ceux-ci lors de la rotation du corps de manette par rapport au support.

Selon l'invention la pièce de guidage allongée s'étend de préférence parallèlement à l'axe de rotation du corps de manette par rapport au support.

Selon une autre caractéristique avantageuse de la présente invention, la pièce de guidage est rigide à la torsion autour de l'axe de rotation du corps de manette et est liée à rotation avec celui-ci, de telle sorte que l'extrémité de la pièce de guidage émergeant au-delà du support à l'intérieur d'un boîtier de commutateur assure une transmission mécanique du mouvement de rotation du corps de manette par rapport au support, à un organe de communication intégré au boîtier.

Selon l'invention la pièce de guidage est avantageusement formée de plusieurs nervures longitudinales monobloc.

Selon un mode de réalisation considéré actuellement comme préférentiel, la pièce de guidage est formée d'une voile plan longitudinal allongé portant de part et d'autre un paire de nervures en saillie.

De préférence, la pièce de guidage est fixée sur le corps de manette par des structures en dents de scie.

Selon une autre caractéristique préférentielle de l'invention le bouton de commande est porté à coulissement sur le corps de manette parallèlement à l'axe de rotation du corps de manette par rapport au support.

Selon une autre caractéristique avantageuse de la présente invention, le corps de manette porte deux contacts électriques, le bouton de commande porte un pontet de liaison électriquement conducteur et le bouton de commande est déplaçable entre une première position dans laquelle le pontet de liaison ne relie pas les contacts électriques et une seconde position dans laquelle le pontet de liaison relie les contacts électriques.

La présente invention concerne également la pièce de guidage précitée considérée comme telle.

Cette pièce de guidage est avantageusement réalisée en matière plastique.

D'autres caractéristiques, buts et avantages de la présente invention apparaîtront à la lecture de la description détaillée qui va suivre et en regard des dessins annexés donnés à titre d'exemples non limitatifs et sur lequel :

- la figure 1 représente une vue en coupe longitudinale d'une manette conforme à la présente invention, selon un plan de coupe référencé I-I sur les figures 2, 3 et 4,
- les figures 2, 3 et 4 représentent des vues en coupe transversale de la manette conforme à la présente invention selon des plans de coupe référencés respectivement II-II, III-III et IV-IV sur la figure 1, et
- la figure 5 représente selon une vue en coupe transversale similaire au plan de coupe de la figure 3, une variante de réalisation de la manette conforme à la présente invention.

La manette conforme à la présente invention représentée sur les figures annexées comprend pour l'essentiel un support 10, un corps de manette 30, un bouton de commande 50 et une pièce de guidage 70.

Le support 10 et le corps de manette 30 présentent une symétrie de révolution autour d'axes respectifs 12, 32 coaxiaux.

Le support 10 comprend un fût cylindrique 14, centré sur l'axe 12 et prolongé à l'opposé du corps de manette 30 par une embase tronconique 16.

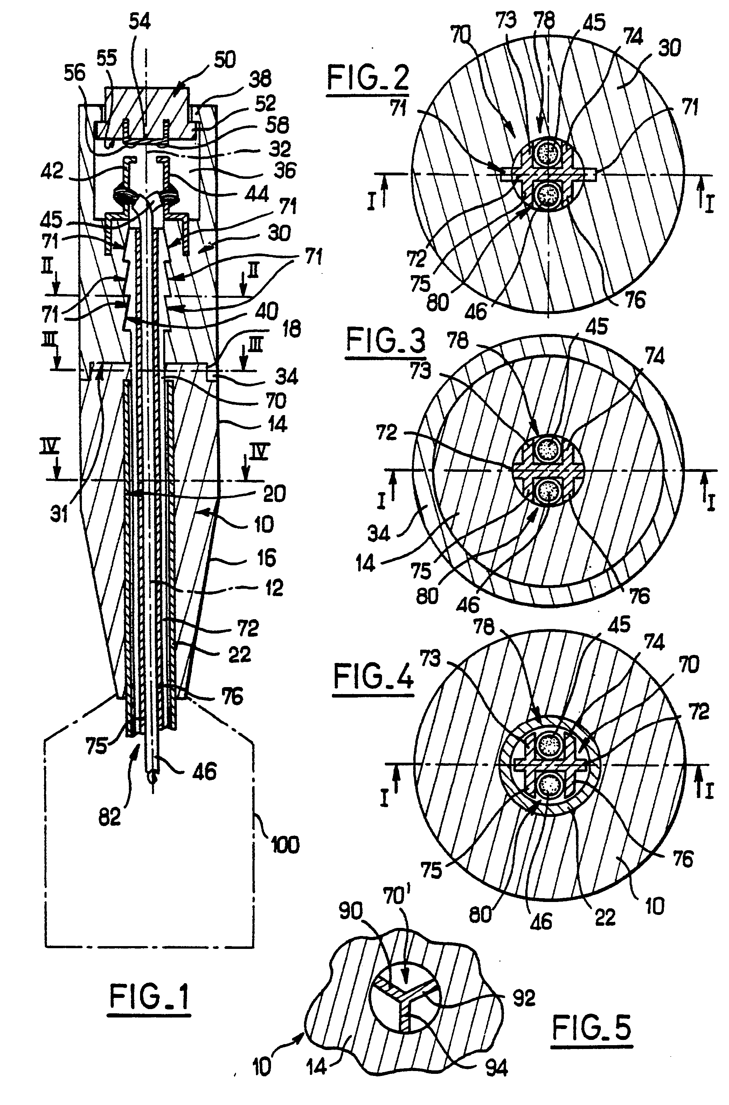

Sur la figure 1, on a représenté schématiquement en traits interrompus et sous la référence 100 un boîtier de commutateur.

Le support 10 est fixé sur ce boîtier 100 par l'intermédiaire de l'embase tronconique 16 précitée.

De plus, le fût cylindrique 14 du support 10 est muni vers le corps de manette 30 d'un prolongement cylindrique 18 centré sur l'axe 12 mais de plus faible section que le fût cylindrique 14.

Le support 10 est muni d'un alésage traversant 20 étagé et centré sur l'axe 12.

La zone de plus grande section de l'alésage traversant 20 loge un manchon cylindrique 22.

Le corps de manette 30 possède une enveloppe cylindrique centrée sur l'axe 32.

De préférence, le diamètre extérieur du corps de manette 30 est identique au diamètre extérieur du fût cylindrique 14 du support.

Le corps de manette 30 est muni sur sa face 31 transversale à l'axe de rotation 32 et adjacente au support 10 d'une nervure annulaire 34. Cette nervure annulaire 34 est prévue sur la périphérie extérieure de la face transversale 31. Le diamètre interne défini par la nervure annulaire 34 correspond sensiblement au diamètre externe du prolongement cylindrique 18 prévu sur le support 10.

Par ailleurs, la hauteur de la nervure annulaire 34 considérée parallèlement à l'axe de rotation 32 correspond sensiblement à la hauteur du prolongement 18 considéré parallèlement à l'axe 12.

Ainsi, l'homme de l'art comprendra aisément à l'examen de la figure 1 que la nervure 34 solidaire du corps de manette 30 peut être engagée sur le prolongement 18 du support pour guider à rotation le corps de manette 30 sur le support 10 autour de l'axe 32 coaxial à l'axe 12.

A l'opposé du support 10 le corps de manette 30 est muni d'une chambre généralement cylindrique 36.

Sur la surface interne de la chambre cylindrique 36 et au voisinage de l'extrémité du corps de manette 30 opposé au support 10 il est prévu une nervure annulaire 38. Celle-ci sert d'appui au bouton de commande 50.

Ce bouton de commande 50 comprend un corps cylindrique dont le diamètre extérieur correspond sensiblement au diamètre interne de la nervure 38 et est muni de plus sur sa surface extérieure et au niveau de son extrémité logée dans la chambre 36 d'une nervure annulaire périphérique 52. Le diamètre extérieur de la nervure 52 est supérieur au diamètre interne défini par la nervure 38.

Ainsi, la nervure 52 solidaire du bouton 50 repose contre la surface transversale à l'axe 32 et dirigée vers la chambre 36, de la nervure 38.

De préférence, le bouton de commande 50 est ainsi repoussé vers l'extérieur de la chambre 36 en appui contre la nervure 38 par l'intermédiaire d'un ressort (non représenté sur la figure 1 pour simplifier l'illustration) intercalé entre le fond de la chambre 36 et le bouton de commande 50.

Le corps de manette 30 supporte deux lames 42, 44 en matériau électriquement conducteur. Ces lames 42, 44 font saillie dans la chambre 36 en direction du bouton 50. De préférence, les lames 42, 44 sont symétriques par rapport à l'axe de révolution 32.

Les lames 42, 44 peuvent faire l'objet de nombreuses variantes de réalisation et leur structure ne sera donc pas décrite plus en détail par la suite.

Le bouton de commande 50 sur sa face 55 transversale à l'axe de rotation 32 et dirigée vers l'intérieur de la chambre 36, un pontet de liaison et matériau électriquement conducteur référencé 54.

Ce pontet de liaison 54 est équipé de deux plots 56, 58 disposés respectivement en regard des extrémités libres des lames 42, 44 précitées.

Le bouton de commande 50 est déplaçable à translation dans la chambre 36 parallèlement à l'axe 32.

Plus précisément, le bouton de commande 50 est déplaçable à translation entre une première position (illustrée sur la figure 1 et correspondant de préférence à une position de repos sollicitée par ressort) dans laquelle le pontet de liaison 54 ne relie pas les lames 42 et 44, et une seconde position (obtenue par poussée sur le bouton de commande 50 parallèlement à l'axe 32, à l'encontre de la sollicitation du ressort) dans laquelle le pontet de liaison 54 relie les lames 42 et 44.

Dans le cadre d'un commutateur pour véhicules automobiles, l'actionnement du bouton de commande 50 permettant de court-circuiter les lames 42, 44 permet par exemple d'alimenter les indicateurs sonores du véhicule automobile ou tout autre organe.

Le corps de la manette 30 est par ailleurs muni d'un orifice traversant 40 centré sur l'axe de rotation 32 et reliant la chambre 36 à la surface transversale 31.

La pièce de guidage 70 conforme à la présente invention est engagée dans cet orifice 40 et fixée sur le corps de la manette 30 au niveau de cet orifice.

La pièce de guidage 70 est allongée parallèlement aux axes 12 et 32 et est engagée dans l'alésage 20 du support et dans le manchon 22 porté par celui-ci.

La pièce de guidage 70 conforme à la présente invention peut faire l'objet de diverses variantes de réalisation.

Selon le mode de réalisation considéré actuellement comme préférentiel, la pièce de guidage 70 est une pièce rigide, réalisée en alliage léger injecté, comprenant un voile plan longitudinal et allongé 72 supportant de part et d'autre de son plan de symétrie moyen une paire de nervures 73, 74 d'une part, et 75, 76 d'autre part.

Les nervures 73, 74, 75, 76 précitées sont de préférence parallèles entre elles.

Les paires de nervures 73, 74 et 75,76 définissent entre elles, respectivement, des canaux longitudinaux 78, 80 aptes à recevoir des fils de liaison électrique 45, 46 reliés, de préférence par soudure aux lames 42, 44.

Comme cela apparaît notamment à l'examen des figures 3 et 4 annexées, les bords libres du voile 72 et des nervures 73, 74, 75, 76 sont de préférence conformées pour définir une enveloppe de la pièce de guidage 70 cylindrique de révolution autour des axes 12 et 32.

De préférence, la section de cette enveloppe cylindrique de la pièce de guidage 70 est sensiblement identique à la plus petite section de l'alésage 20 réalisé dans le support 10 (voir figure 3) et est légèrement inférieure à la section interne du manchon 22 portée par le support 10 (voir figure 4).

La pièce de guidage 70 est fixée à translation et à rotation sur le corps de manette 30.

Pour cela, selon le mode de réalisation représenté sur les figures, la pièce de guidage 70 est munie au niveau de son extrémité opposée au boîtier de commutateur 100, de structures en dents de scie 71 sur les bords libres opposés du voile plan longitudinal 72.

Le corps de la manette 30 peut être surmoulé sur ses structures en dents de scie 71 de la pièce de guidage.

Bien entendu, l'ancrage de la pièce de guidage 70 sur le corps de manette pourra être réalisé par tout autre moyen fonctionnellement équivalent.

Les fils de liaison 45, 46 reliant les lames 42, 44 à un organe électrique logé dans le boîtier de commutateur 100 ou dans un autre point du véhicule, sont introduits dans les canaux 78, 80 longitudinaux définis par la pièce de guidage 70.

Ainsi, l'homme de l'art comprendra aisément que lorsque le corps de manette 30 est entraîné en rotation autour de l'axe 32, par rapport au support 10 , la pièce de guidage 70 évite une torsion des fils de liaison 45, 46 sur la longueur de la manette comprenant le corps de manette 30 et le support 10, pour éviter toutes détériorations des fils de liaison 45, 46 à ce niveau.

La pièce de guidage 70 est par ailleurs rigide à la torsion autour de l'axe de rotation 32 du corps de manette et liée à rotation avec celui-ci de telle sorte que l'extrémité 82 de la pièce de guidage 70 émergeant au-delà du support 10 à l'intérieur du boîtier de commutateur 100 puisse assurer une transmission mécanique du mouvement de rotation du corps de manette 30 par rapport au support 10 sur un organe de commutation intégré au boîtier 100. Un tel organe de commutation peut être formé par exemple d'un tiroir guidé à translation dans le boîtier 100 et commandé à déplacement par l'extrémité 82 de la pièce de guidage 70 pour modifier l'état de liaison de contacts électriques supportés dans le boîtier 100.

Plus précisément encore, ce tiroir peut être commandé à déplacement par un doigt solidaire de l'extrémité 82 de la pièce de guidage 70 et excentré par rapport à l'axe de rotation 32.

En particulier, comme indiqué précédemment, la pièce de guidage 70 peut faire l'objet de différentes variantes de réalisation.

A titre d'exemple, on a illustré sur la figure 5, une variante de réalisation de la pièce de guidage 70 selon laquelle cette dernière est formée de trois nervures 90, 92, 94 disposées en étoile. Ces nervures 90, 92, 94 convergent vers l'axe 32 qui coïncide avec un axe de symétrie de la pièce de guidage. L'inclinaison entre deux nervures adjacentes est de l'ordre de 120°. Cette pièce de guidage 70' illustrée sur la figure 5 définit 3 canaux longitudinaux aptes à recevoir des fils de liaison.

## Revendications

1. Manette pour la commande de commutateurs, en particulier de commutateurs pour véhicules automobiles, du type comprenant :
- un corps de manette (30) monté à rotation sur un support (10) et qui porte des contacts électriques (42, 44),
- un bouton de commande (50) monté mobile sur le corps de manette (30) pour modifier l'état de liaison des contacts électriques (42, 44),
- des fils de liaison (45, 46) reliés aux contacts électriques portés par le corps de manette, ces fils de liaison traversant le corps de manette (30) et étant engagés dans un alésage (20) ménagé dans le support (10), caractérisée par le fait qu'elle comprend en outre :
- une pièce de guidage (70) allongée fixée sur le corps de manette (30) et engagée dans l'alésage (20) du support, qui définit des canaux longitudinaux (78, 80) débouchant sur l'extérieur pour recevoir les fils de liaison (45, 46) et éviter une torsion de ceux-ci lors de la rotation du corps de manette (30) par rapport au support (10).

2. Manette selon la revendication 1, caractérisée par le fait que la pièce de guidage allongée (70) s'étend parallèlement à l'axe de rotation (32) du corps de manette (30) par rapport au support (10).

3. Manette selon l'une des revendications 1 ou 2, caractérisée par le fait que la pièce de guidage (70) est rigide à la torsion autour de l'axe de rotation (32) du corps de manette (30) et est liée à rotation avec celui-ci, de telle sorte que l'extrémité (82) de la pièce de guidage (70) émergeant au-delà du support (10) à l'intérieur d'un boîtier de commutateur (100) assure une transmission mécanique du mouvement de rotation du corps de manette (30) par rapport au support (10), à un organe de commutation intégré au boîtier.

4. Manette selon l'une des revendications 1 à 3, caractérisée par le fait que la pièce de guidage (70) est formée de plusieurs nervures longitudinales monobloc (72,73,74,75,76 ; 90,92,94).

5. Manette selon l'une des revendications 1 à 4, caractérisée par le fait que la pièce de guidage (70) est formé d'un voile plan longitudinal allongé (72) portant de part et d'autre une paire de nervures en saillie (73,74 ; 75,76).

6. Manette selon l'une des revendications 1 à 5, caractérisée par le fait que la pièce de guidage (70) est fixée sur le corps de manette (30) par des structures en dent de scie (71).

7. Manette selon l'une des revendications 1 à 6, caractérisée par le fait que le bouton de commande (50) est porté à coulissement sur le corps de manette (30) parallèlement à l'axe de rotation (32) du corps de manette (30) par rapport au support (10).

8. Manette selon l'une des revendications 1 à 7, caractérisée par le fait que le corps de manette (30) porte deux contacts électriques (42, 44), que le bouton de commande (50) porte un pontet de liaison électriquement conducteur (54), et que le bouton de commande (50) est déplaçable entre une première position dans laquelle le pontet de liaison (54) ne relie par les contacts électriques (42, 44), et une seconde position dans laquelle le pontet de liaison (54) relie les contacts électriques (42, 44).

9. Manette selon l'une des revendications 1 à 8, caractérisée par le fait que la pièce de guidage (70) est réalisée en alliage léger injecté.

10. Pièce de guidage formée de plusieurs nervures longitudinales monobloc (72, 73, 74, 75, 76; 90, 92, 94) définissant des canaux longitudinaux (78, 80) débouchant sur l'extérieur, destinée à une manette de commande pour commutateur selon l'une des revendications 1 à 9.

11. Pièce de guidage selon la revendication 10, caractérisé par le fait que la pièce de guidage (70) est formée d'un voile plan longitudinal allongé (72) portant de part et d'autre une paire de nervures en saillie (73, 74; 75, 76).

12. Pièce de guidage selon l'une des revendications 10 ou 11, caractérisé par le fait qu'elle est réalisée en alliage léger injecté.

## Patentansprüche

1. Bedienelement für das Einstellen von Kommutatoren, insbesondere von Kommutatoren für Kraftfahrzeuge, mit:

– einem Bedienelementkörper (30), der drehbar auf einem Träger (10) angebracht ist und der elektrische Kontakte (42, 44) trägt,

– einem Betätigungsknopf (50), der bewegbar auf dem Bedienelementkörper (30) angebracht ist, um den Verbindungszustand der elektrischen Kontakte (42, 44) zu ändern,

– Verbindungsleitungen (45, 46), die mit den vom Bedienelementkörper getragenen elektrischen Kontakten verbunden sind, wobei die Verbindungsleitungen den Bedienelementkörper (30) durchqueren und in eine in dem Träger (10) vorgesehene Bohrung (20) eingesetzt sind, dadurch gekennzeichnet, daß es weiterhin

– ein langgestrecktes, am Bedienelementkörper (30) befestigtes und in die Bohrung (20) des Trägers eingreifendes Führungsstück (70), das sich in Längsrichtung erstreckende, nach außen mündende Kanäle (78, 80) definiert, welche Verbindungsleitungen (45, 46) aufnehmen und ihre Verdrillung beim Drehen des Körpers verhindern sollen, aufweist.

2. Bedienelement nach Anspruch 1, dadurch gekennzeichnet, daß das langgestreckte Führungsstück (70) sich parallel zur Drehachse (32) des Bedienelementkörpers (30) in bezug auf den Träger (10) erstreckt.

3. Bedienelement nach Anspruch 1 oder 2, dadurch gekennzeichnet, daß das langgestreckte Führungsstück (70) torsionssteif in bezug auf die Drehachse (32) des Bedienelementkörpers (30) ist und drehbar mit diesem so verbunden ist, daß der Endabschnitt (82) des Führungsstückes, der aus dem Träger (10) heraus in das Innere eines Kommutatorgehäuses (100) ragt, eine mechanische Übertragung der Drehbewegung des Bedienelementkörpers (30) in bezug auf den Träger (10) auf ein in das Gehäuse eingegliedertes Kommutationsbauteil sicherstellt.

4. Bedienelement nach einem der Ansprüche 1 bis 3, dadurch gekennzeichnet, daß das Führungsstück (70) aus einer Mehrzahl einstückiger, langgestreckter Rippen (72, 73, 74, 75, 76; 90, 92, 94) gebildet ist.

5. Bedienelement nach einem der Ansprüche 1 bis 4, dadurch gekennzeichnet, daß das Führungsstück (70) aus einer langgestreckten, flächigen Abdeckung (72), welche auf beiden Seiten ein Paar hervorstehender Rippen (73, 74; 75, 76) trägt, gebildet ist.

6. Bedienelement nach einem der Ansprüche 1 bis 5, dadurch gekennzeichnet, daß das Führungsstück (70) auf dem Bedienelementkörper (30) durch Sägezahnstrukturen (71) befestigt ist.

7. Bedienelement nach einem der Ansprüche 1 bis 6, dadurch gekennzeichnet, daß der Betätigungsknopf (50) gleitend auf dem Bedienelementkörper (30) parallel zur Drehachse (32) des Bedienelementkörpers (30) in bezug auf den Träger (10) getragen ist.

8. Bedienelement nach einem der Ansprüche 1 bis 7, dadurch gekennzeichnet, daß der Bedienelementkörper (30) zwei elektrische Kontakte (42, 44) trägt, daß der Betätigungsknopf (50) eine elektrisch leitende Verbindungsbrücke (54) trägt und daß der Betätigungsknopf (50) zwischen einer ersten Stellung, in der die Verbindungsbrücke (54) nicht die elektrischen Kontakte (42, 44) verbindet und einer zweiten Stellung, in der die Verbindungsbrücke (54) die elektrischen Kontakte (42, 44) verbindet, verstellbar ist.

9. Bedienelement nach einem der Ansprüche 1 bis 8, dadurch gekennzeichnet, daß das Führungsstück (70) aus einer Leichtmetall-Spritzlegierung hergestellt ist.

10. Führungsstück aus einer Mehrzahl einstückiger, langgestreckter Rippen (72, 73, 74, 75, 76; 90, 92, 94), die nach außen mündende langgestreckte Kanäle (78, 80) definieren, bestimmt für ein Bedienelement für Kommutatoren nach einem der Ansprüche 1 bis 9.

11. Führungsstück nach Anspruch 10, dadurch gekennzeichnet, daß das Führungsstück (70) aus einer langgestreckten, flächigen Abdeckung (72), welche auf beiden Seiten ein Paar hervorstehender Rippen (73, 74; 75, 76) trägt, gebildet ist.

12. Führungsstück nach Anspruch 10 oder 11, dadurch gekennzeichnet, daß das Führungsstück (70) aus einer Leichtmetall-Spritzlegierung hergestellt ist.

**Claims**

1. Handle for the control of switches, especially switches for motor vehicles, of the type comprising:
   – a handle body (30) mounted rotatably on a support (10) and carrying electrical contacts (42, 44),
   – a control button (50) mounted movably on the handle body (30) in order to change the state of connection of the electrical contacts (42, 44),
   – connecting wires (45, 46) joined to the electrical contacts carried by the handle body, these connecting wires passing through the handle body (30) and being engaged in a bore (20) made in the support (10), characterized in that it comprises furthermore:
   – an elongate guide piece (70) which is fastened to the handle body (30) and is engaged in the bore (20) of the support and which defines longitudinal conduits (78, 80) opening onto the outside and intended for receiving the connecting wires (45, 46) and for preventing these from twisting during the rotation of the handle body (30) relative to the support (10).

2. Handle according to Claim 1, characterized in that the elongate guide piece (70) extends parallel to the axis of rotation (32) of the handle body (30) relative to the support (10).

3. Handle according to one of Claims 1 or 2, characterized in that the guide piece (70) is rigid to torsion about the axis of rotation (32) of the handle body (30) and is connected in terms of rotation to the latter, in such a way that the end (82) of the guide piece (70) emerging beyond the support (10) into a switch housing (100) ensures a mechanical transmission of the rotational movement of the handle body (30) relative to the support (10) to a switching member incorporated in the housing.

4. Handle according to one of Claims 1 to 3, characterized in that the guide piece (70) is formed from a plurality of integral longitudinal ribs (72, 73, 74, 75, 76; 90, 92, 94).

5. Handle according to one of Claims 1 to 4, characterized in that the guide piece (70) is formed from a plane elongate longitudinal web (72) carrying a pair of projecting ribs (73, 74; 75, 76) on either side.

6. Handle according to one of Claims 1 to 5, characterized in that the guide piece (70) is fastened to the handle body (30) by means of sawtooth-shaped structures (71).

7. Handle according to one of Claims 1 to 6, characterized in that the control button (50) is carried on the handle body (30) slidably in parallel with the axis of rotation (32) of the handle body (30) relative to the support (10).

8. Handle according to one of Claims 1 to 7, characterized in that the handle body (30) carries two electrical contacts (42, 44), in that the control button (50) carries an electrically conductive junction yoke (54), and in that the control button (50) is movable between a first position, in which the junction yoke (54) does not connect electrical contacts (42, 44), and a second position, in which the junction yoke (54) connects the electrical contacts (42, 44).

9. Handle according to one of Claims 1 to 8, characterized in that the guide piece (70) is produced from an injection-moulded light alloy.

10. Guide piece which is formed from a plurality of integral longitudinal ribs (72, 73, 74, 75, 76; 90, 92, 94) defining longitudinal conduits (78, 80) opening onto the outside and which is intended for a switch control handle according to one of Claims 1 to 9.

11. Guide piece according to Claim 10, characterized in that the guide piece (70) is formed from a plane elongate longitudinal web (72) carrying a pair of projecting ribs (73, 74; 75, 76) on either side.

12. Guide piece according to one of Claims 10 or 11, characterized in that it is produced from an injection-moulded light alloy.

FIG_1

FIG_2

FIG_3

FIG_4

FIG_5